# EUROPÄISCHE PATENTSCHRIFT

(11) **EP 3 582 917 B1**
(45) Veröffentlichungstag und Bekanntmachung des Hinweises auf die Patenterteilung: **16.04.2025**
(21) Anmeldenummer: 18702980.6
(22) Anmeldetag: 31.01.2018
(51) Int. Cl.: B23B 51/05

(54) **LOCHSÄGE**
HOLE SAW
SCIE CLOCHE

(30) Priorität: 14.02.2017 DE 202017100778 U
(43) Veröffentlichungstag der Anmeldung: 25.12.2019
(73) Patentinhaber: Wolfcraft GmbH, 56746 Kempenich (DE)
(72) Erfinder: EBERT, Winfried, 56745 Weibern (DE); SCHLICH, Thomas, 53534 Hoffeld (DE); DEUSTER, Thomas, 56746 Kempenich (DE); ZERWAS, Jörg, 56743 Mendig (DE)
(74) Vertreter: Grundmann, Dirk
(86) Internationale Anmeldenummer: PCT/EP2018/052415
(87) Internationale Veröffentlichungsnummer: WO 2018/149647

(56) Entgegenhaltungen:
- EP-A1- 2 465 627
- CN-A- 106 079 113
- DE-A1- 4 406 597
- DE-C- 817 365
- DE-U- 1 876 824
- US-A- 1 441 994
- US-A- 5 466 099
- US-A1- 2013 039 708
- US-A1- 2014 369 775

## Beschreibung

### Gebiet der Technik

Die Erfindung betrifft eine Lochsäge gemäß dem Oberbegriff des Anspruchs 1. Eine solche Lochsäge ist aus der DE 44 06 597 A1 bekannt.

### Stand der Technik

Aus der US 2,140,192 ist eine Lochsäge bekannt, bei der das Sägeelement ein sich auf einer Kreisbogenlinie erstreckendes Sägeblatt ist. Eine ähnliche Lochsäge beschreibt die US 1,448,697.

Die WO 2004/078389 beschreibt ein ringförmiges Halteglied, das mittels drei Speichen mit einem Zentralelement verbunden ist, in dem ein Pilotbohrer und ein Einspannschaft steckt. Der Ring trägt mehrere gewölbte Sägeschäfte, die an ihren Enden eine Sägeverzahnung aufweisen.

Die US 2,618,991 beschreibt eine Lochsäge, bei der die Speichen in unterschiedlichen Radialabständen Öffnungen aufweisen zur Befestigung von Sägeelementen in unterschiedlichen Radialpositionen.

Die DE 1 876 824 beschreibt eine Lochsäge, bei der die Speichen längliche Schlitze aufweisen, die in Bodenflächen von Befestigungstaschen verlaufen. In den Befestigungstaschen sitzen die Befestigungselemente von Sägeelementen. Von der dem Einspannschaft zugeordneten Breitseitenebene des Haltegliedes sind Gewindeschrauben im Innengewinde der Befestigungselemente eingeschraubt.

Aus der DE 298 07 780 U1 ist eine Lochsäge bekannt, bei der das Halteglied auf seiner vom Einspannschaft weg weisenden Seite Befestigungstaschen in einer 45 Grad-Winkelstellung zueinander aufweist, in der in unterschiedlichen Radialstellungen Sägeelemente befestigt werden können. Die Einstellung der Radiallage der Sägeelemente erfolgt durch Distanzstücke.

Die US 8,840,344 B2 beschreibt eine Lochsäge mit einem Pilotbohrer, bei der Befestigungselemente in Radialrichtung verstellbar sind, wobei jedes Befestigungselement ein gewölbtes Sägeblatt trägt.

Aus der DE 44 06 597 A1 ist eine Lochsäge bekannt, bei der zwei Sägeelemente in einer 100 Grad-Winkelstellung zueinander angeordnet sind und Schrauben vom Befestigungselement her durch einen Längsschlitz hindurchgreifen. Die radiale Fixierung der Sägeelemente erfolgt mit einer Gewindespindel.

### Zusammenfassung der Erfindung

Der Erfindung liegt die Aufgabe zugrunde, die gattungsgemäße Lochsäge gebrauchsvorteilhaft weiterzubilden.

Gelöst wird die Aufgabe durch eine Lochsäge gemäß Anspruch 1. Bevorzugte Ausführungsformen der vorliegenden Erfindung sind in den abhängigen Ansprüchen definiert.

Zunächst und im Wesentlichen wird vorgeschlagen, dass auf der zum Einspannschaft weisenden Seite des Haltegliedes Kulissensteine angeordnet sind, die ein Innengewinde aufweisen, in das die Schraube eingeschraubt werden kann, mit der das Befestigungselement in der Befestigungstasche gehalten wird. Der Schraubenkopf kann sich dabei auf dem Befestigungselement abstützen. Das Einschrauben der Schraube erfolgt in das Befestigungselement. Die Befestigungsöffnung ist erfindungsgemäß kein Längsschlitz, der sich über den gesamten Verstellbereich erstreckt, innerhalb dessen das Sägeelement in unterschiedliche Radialstellungen bringbar ist. Neben Rundlöchern, deren Durchmesser nur geringfügig größer ist, als der Durchmesser der durch sie hindurchragenden Gewindeschäfte, befinden sich in den Bodenflächen der Befestigungstaschen auch Langlöcher, die eine Länge besitzen, die größer ist als der Durchmesser des Gewindeschaftes und insbesondere mindestens so lang sind, wie das Zweifache eines Durchmessers. Die Langlöcher sind aber bevorzugt maximal ein Drittel so lang wie der radiale Einstellbereich der Sägeelemente. Sie bilden mit ihren gerundeten Schmalseiten Anschläge für die Gewindeschäfte in definierten Radialstellungen, in denen mindestens drei Sägeverzahnungen auf einer gemeinsamen Kreisbogenlinie um die Achse angeordnet sind. Die Langlöcher können aber auch länger sein oder kürzer, bspw. eine Länge von nur anderthalb Durchmessern besitzen. Wesentlich ist, dass die Enden der Langlöcher Anschläge für definierte Radialstellungen sind. In der Fläche neben den Befestigungstaschen können Einprägungen vorgesehen sein, die als lesbare Zeichen die jeweiligen Durchmesser angeben. Die Kulissensteine befinden sich bevorzugt in einer Führungswanne. Die Kulissensteine können von Führungsflanken geführt sein. Die Führungsflanken werden bevorzugt von Seitenwandungen der Führungswanne ausgebildet. Die Befestigungselemente können Befestigungskörper sein, an denen ein Sägeschaft befestigbar ist. Die Befestigungselemente können aber auch von Abwinklungen eines Metallstreifens gebildet sein, der auch den Sägeschaft ausbildet. Die Befestigungstaschen können verschiedene radiale Längen aufweisen. Es können erste Befestigungstaschen vorgesehen sein, die sich bis in das Zentrum des Haltegliedes erstrecken. Die ersten Befestigungstaschen sind bevorzugt in einer 120 Grad-Winkelanordnung angeordnet. Es können zweite Befestigungstaschen vorgesehen sein, die ebenfalls in einer 120 Grad-Winkelanordnung zueinander angeordnet sein können. Bevorzugt liegen die zweiten Befestigungstaschen jeweils mittig zwischen den ersten Befestigungstaschen. Die zweiten Befestigungstaschen können eine Bodenfläche aufweisen, die ringsum von einer Wandung begrenzt ist. Die Befestigungstaschen sind bevorzugt Vertiefungen der ansonsten ebenen Stirnseite einer Haltescheibe, die vom Halteglied ausgebildet wird. Die Haltescheibe kann einen kreisbogenförmigen Grundriss aufweisen. Während die kreisrunden Befestigungsöffnungen nur eine einzige Radialstellung des Befestigungselementes definieren, definieren die Langlöcher mit ihren beiden voneinander weg weisenden, gerundeten Endabschnitten Anschlagflächen für die Schraube, so dass das Befestigungselement in zwei definierten Radialstellungen fixiert werden kann, wobei in einer ersten Radialstellung der Gewindeschaft der Schraube an einer radial innenliegenden Begrenzungsfläche des Langloches anliegt und in einer zweiten Radialstellung in einer radial außenliegenden Begrenzungsfläche des Langloches anliegt. Ein weiterer Aspekt der Erfindung sieht vor, dass die Befestigungselemente von Befestigungskörpern ausgebildet sind. Die Befestigungskörper besitzen eine Stirnseite, mit der sie an der Bodenfläche der Befestigungstasche anliegen und Seitenwände, mit denen das Befestigungselement an den Seitenflanken der Befestigungstasche geführt ist. Der Befestigungskörper kann eine zur Achse weisende Befestigungsfläche und eine von der Achse weg weisende Befestigungsfläche aufweisen. Eine derart ausgebildete radial innenliegende Befestigungsfläche besitzt bevorzugt einen hohl gewölbten Verlauf zur Befestigung eines gewölbten Sägeschaftes mittels einer eine Befestigungsöffnung des Sägeschaftes durchgreifenden Befestigungsschraube. Eine radial außenliegende Befestigungsfläche besitzt bevorzugt eine Wölbung ebenfalls zur Anlage einer gewölbten Breitseitenfläche eines Sägeschaftes, wobei auch hier die Befestigung des Sägeschaftes am Befestigungskörper mittels einer Befestigungsschraube erfolgt, die in ein Innengewinde des Befestigungskörpers eingedreht wird. Die gewölbten Befestigungsflächen des Befestigungskörpers verlaufen bevorzugt entlang von Bogenlinien, die sich um die Achse erstrecken. Es ist somit möglich, gewölbte Sägeschäfte, die an ihren freien Enden eine zumindest einen Zahn aufweisende Sägeverzahnung aufweisen, sowohl an radial innenliegenden als auch an radial außenliegenden Befestigungsflächen zu befestigen. Die Radialposition der Befestigungselemente wird durch das Lochbild der Bodenfläche der Befestigungstasche definiert. In einer Variante der Erfindung sind die Befestigungselemente materialeinheitliche Abwinklungen der Sägeschäfte, wobei auch hier vorgesehen ist, dass die Sägeschäfte eine Wölbung aufweisen und sich somit auf einer Kreisbogenlinie um die Achse der Haltescheibe erstrecken. Bevorzugt werden zwei voneinander verschiedene Sägeelemente verwendet. Erste Sägeelemente besitzen Abwinklungen, die sich - bezogen auf den Verlauf der Wölbung des Sägeschaftes - in Radialeinwärtsrichtung erstrecken und zweite Sägeelemente, bei denen sich die Abwinklung in Radialauswärtsrichtung erstreckt. Zufolge der erfindungsgemäßen Ausgestaltung wird mit wenigen Befestigungsöffnungen in der Bodenfläche eine Vielzahl von Einstellmöglichkeiten für die Sägeelemente erreicht. Die Sägeelemente können wahlweise - bezogen auf das Befestigungselement - mit radial innenliegenden Sägeschäften oder radial außenliegenden Sägeschäften verwendet werden. Die Sägeelemente können darüber hinaus wahlweise jeweils in den ersten Befestigungstaschen oder jeweils in den zweiten Befestigungstaschen verwendet werden. Es ist durch die bevorzugte Ausgestaltung sichergestellt, dass immer zumindest drei Sägeelemente Sägeverzahnungen aufweisen, die auf einer gemeinsamen Kreisbogenlinie um die Achse angeordnet sind. In einer bevorzugten Weiterbildung der Erfindung besteht das Halteglied aus einer Haltescheibe und einem Deckelteil. Die Haltescheibe trägt die Sägeelemente. Die Deckelscheibe überfängt die zum Einspannschaft weisende Breitseitenfläche der Haltescheibe und bildet somit eine Höhlung aus, in der sich die Kulissensteine befinden. Die zur Haltescheibe weisende Deckelinnenseite kann darüber hinaus sich in Radialrichtung erstreckende Stützrippen aufweisen, die sich über den zum Deckelteil weisenden Breitseitenflächen der Kulissensteine erstrecken, so dass die Stützrippen von den Bodenflächen der Führungswannen in Achsrichtung beabstandet sind und einen Kanal zwischen den Führungsflanken verschließen, in dem jeweils ein Kulissenstein radial verschieblich angeordnet ist. Ein Rand des Deckelteiles kann darüber hinaus einen Randsteg der Haltescheibe überfangen. Die Verbindung des Deckelteiles mit der Haltescheibe erfolgt bevorzugt mittels Befestigungsschrauben, wobei die Befestigungsschrauben bevorzugt von der zum Einspannende weisenden Breitseitenfläche des Haltegliedes eingeschraubt sind. In einem weiteren Aspekt der Erfindung bildet das Halteglied und insbesondere die Haltescheibe eine Befestigungshülse aus. Die Befestigungshülse besitzt eine axiale Öffnung, in die der Einspannschaft eingesteckt ist. Das in die Befestigungshülse eingesteckte Ende des Einspannschaftes besitzt eine zur Stirnseite des Einspannschaftes hin offene Axialbohrung. Die Stirnseite stützt sich auf dem Boden der axialen Höhlung der Befestigungshülse ab, die eine zentrale Öffnung aufweist, durch die ein Einspannende eines Pilotbohrers von der vom Einspannschaft weg weisenden Seite der Haltescheibe eingesteckt ist. Das Einspannende des Pilotbohrers ragt in die Axialbohrung des Einspannschaftes hinein, so dass das Einspannende des Pilotbohrers und ein Endabschnitt des Einspannschaftes in koaxialer Lage in der Axialhöhlung der Befestigungshülse stecken. Die Axialbohrung des Einspannschaftes besitzt ein radiales Fenster. Durch das Fenster greift ein Klemmelement, das an der Befestigungshülse fixiert ist, um sowohl den Einspannschaft als auch den Pilotbohrer axial an das Halteglied zu fesseln. Das Klemmelement kann eine Klemmschraube und insbesondere eine Madenschraube sein, die in ein radiales Innengewinde der Befestigungshülse hineingedreht ist. Die Stirnseite der Klemmschraube kann sich am Einspannende des Pilotbohrers abstützen. Hierzu besitzt das Einspannende bevorzugt eine Abflachung, die von einer Vertiefung ausgebildet ist. In einer Weiterbildung der Erfindung kann die Klemmschraube einen Konusabschnitt aufweisen, mit dem sich der Durchmesser des Schaftes der Klemmschraube verjüngt. Dieser Konusabschnitt kann sich an einem konischen Rand des Fensters des Einspannschaftes abstützen, so dass der Einspannschaft klemmgesichert ist und die Stirnseite der Klemmschraube in der Vertiefung des Einspannendes des Pilotbohrers steckt. Die Axialöffnung der Befestigungshülse kann fertigungsbedingt leicht konisch ausgebildet sein. Zur besseren Führung des Einspannschaftes befindet sich im Bereich des Öffnungsrandes der Axialöffnung ein Sprengring, der auf der Außenmantelfläche des Einspannschaftes sitzt und in einer umlaufenden Aussparung der Axialöffnung der Befestigungshülse einliegt. Die Axialhöhlung der Befestigungshülse besitzt eine Entformungsschräge. Die Materialstärke des Sprengrings entspricht bevorzugt der radialen Weite der umlaufenden Aussparung, so dass der sich einerseits auf dem Einspannschaft abstützende Sprengring andererseits in Flächenanlage an der Aussparungswand anliegt.

### Kurze Beschreibung der Zeichnungen

Ausführungsbeispiele der Erfindung werden nachfolgend anhand beigefügter Zeichnungen erläutert. Es zeigen:
- Fig. 1: in einer ersten perspektivischen Darstellung ein erstes Ausführungsbeispiel der Erfindung,
- Fig. 2: in einer zweiten perspektivischen Darstellung teilweise aufgebrochen das Ausführungsbeispiel,
- Fig. 3: in einer Unteransicht das Ausführungsbeispiel,
- Fig. 4: den Schnitt gemäß der Linie IV-IV in Figur 3, wobei ein Sägeschaft 10 an einer radial innenliegenden Befestigungsfläche 16' eines Befestigungselementes 9 befestigt ist,
- Fig. 5: den Schnitt gemäß der Linie V-V in Figur 4,
- Fig. 6: den Schnitt gemäß der Linie VI-VI in Figur 4,
- Fig. 7: eine erste Explosionsdarstellung des Ausführungsbeispiels,
- Fig. 8: eine zweite Explosionsdarstellung des Ausführungsbeispiels,
- Fig. 9: einen Schnitt gemäß Figur 4, jedoch in einer anderen Winkelstellung, so dass eine Klemmschraube 27 sichtbar ist, wobei hier der Sägeschaft 10 an einer radial außenliegenden Befestigungsfläche 16 des Befestigungselementes 9 befestigt ist,
- Fig. 10: eine Darstellung gemäß Figur 9, jedoch mit einem Sägeelement 8, bei dem der Sägeschaft 10 materialeinheitlich mit dem Befestigungselement 9 verbunden ist, wobei das Befestigungselement 9 eine Abwinklung des Sägeschaftes 10 ist, welcher radial einwärts gerichtet ist,
- Fig. 11: eine Darstellung gemäß Figur 10, jedoch mit einem anders gestalteten Sägeelement 8, bei dem das materialeinheitlich am Sägeschaft 10 befestigte Befestigungselement 9 in Radialauswärtsrichtung gebogen ist,
- Fig. 12: ein weiteres Ausführungsbeispiel einer Haltescheibe 3 mit Blick auf die Befestigungstaschen 7,
- Fig. 13: das in der Figur 12 dargestellte Ausführungsbeispiel mit Blick auf die Führungswannen 14,
- Fig. 14: eine Darstellung gemäß Figur 12 eines weiteren Ausführungsbeispiels einer Haltescheibe 3,
- Fig. 15: eine Darstellung gemäß Figur 13 des in der Figur 14 dargestellten Ausführungsbeispiels,
- Fig. 16: ein weiteres Ausführungsbeispiel einer Haltescheibe 3 in einer Darstellung gemäß Figur 12 und
- Fig. 17: die in der Figur 16 dargestellte Haltescheibe 3 in einer Darstellung gemäß Figur 13.

### Beschreibung der Ausführungsformen

Das in den Zeichnungen dargestellte Werkzeug ist eine Lochsäge, mit der in Werkstücke Löcher gebohrt werden können, wozu ein oder mehrere Sägeschäfte 10, die jeweils eine Sägeverzahnung 11 ausbilden, auf einer Kreisbogenlinie umlaufend angetrieben werden.

Ein Einspannschaft 1 kann einen runden, im Ausführungsbeispiel einen mehrkantigen Querschnitt aufweisen. Der Einspannschaft 1 besitzt ein freies Ende, das in ein Futter einer Antriebsmaschine eingespannt werden kann. Das andere Ende des Einspannschaftes 1 steckt in einer Axialhöhlung einer Befestigungshülse 24, die einen zentralen Abschnitt eines Haltegliedes 2 ausbildet. Der Einspannschaft 1 besitzt eine Stirnfläche, die sich auf einem Boden 32 der axialen Höhlung der Befestigungshülse 24 abstützen kann. In der Stirnseite des Einspannschaftes 1 befindet sich eine Öffnung einer Axialbohrung 26, deren Länge etwa der Länge der Axialhöhlung 24' der Befestigungshülse 24 entspricht. In der Axialbohrung 26 steckt ein Einspannende 25' eines Pilotbohrers 25, dessen Bohrspitze von der dem Einspannende 1 gegenüberliegenden Breitseitenfläche des Haltegliedes 2 abragt. Der Schaft des Pilotbohrers 25 durchgreift eine Öffnung 33 des Haltegliedes 2. Das Einspannende 25' besitzt eine Ausnehmung mit einer Abflachung 30. Auf dieser Abflachung 30 kann sich die Stirnseite einer ein Klemmelement bildenden Klemmschraube 27 abstützen, die in ein Innengewinde einer Radialbohrung der Befestigungshülse 24 eingedreht ist.

Die Klemmschraube 27 ist eine Madenschraube, die einen Konusabschnitt 31 aufweist. Der Konusabschnitt 31 stützt sich an einem konischen Rand 29' eines Fensters 29 ab. Bei dem Fenster 29 handelt es sich um eine Radialöffnung der Axialbohrung 26 im Einspannschaft 1. Die Klemmschraube 27 besitzt eine Schraubwerkzeug-Eingriffsöffnung, die im Ausführungsbeispiel eine Sechskantöffnung ist. Ihr Stirnende, das sich an der Abflachung 30 abstützt, ist eben. Die Klemmschraube 27 kann den Einspannschaft 1 auch in einer Axiallage fixieren, in der seine Stirnseite vom Boden 32 beabstandet ist.

Nahe des Öffnungsrandes der Axialhöhlung 24' der Befestigungshülse 24 befindet sich ein Sprengring 34, der auf dem Einspannschaft 1 aufgesetzt ist und der die Lage des Einspannschaftes 1 innerhalb der Axialhöhlung 24' fixiert. Der Öffnungsrand der Axialhöhlung 24' besitzt eine Umfangsausnehmung 35, in der der Sprengring 34 einliegt. Die Umfangsausnehmung kann eine radiale Breite haben, die der Materialstärke des Sprengrings 34 entspricht, so dass sich der Sprengring 34 an der sich koaxial zur Achse erstreckenden Wand der Umfangsausnehmung 35 abstützen kann, um so den Einspannschaft 1 sicher in der Axialhöhlung 24' zu fesseln, wenn diese aus entformungstechnischen Gründen eine leicht konisch verlaufende Innenwand aufweist.

Die zum Einspannschaft 1 weisende Breitseitenfläche der Haltescheibe 3 ist von einem Deckelteil 4 überfangen, wobei das Deckelteil 4 eine zentrale Öffnung aufweist, durch die die Befestigungshülse 24 hindurchragt. Zwischen dem Deckelteil 4 und der Haltescheibe 3 verbleibt eine Höhlung 5.

Das Deckelteil 4 übergreift mit einem Randabschnitt 20 einen Randsteg 21 der Haltescheibe 3.

Von der Haltescheibe 3 ragen in Richtung des Deckelteiles 4 Befestigungssockel 23 ab, in die Schrauben 22 eingeschraubt sind, mit denen das Deckelteil 4 mit der Haltescheibe 3 verbunden ist.

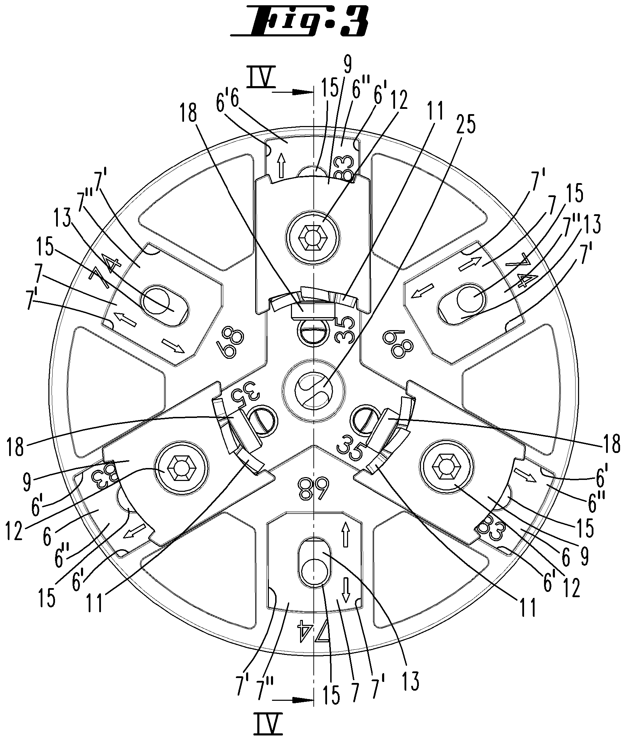

Die vom Einspannschaft 1 weg weisende Breitseitenfläche der einen kreisförmigen Grundriss aufweisenden Haltescheibe 3 besitzt unterschiedlich gestaltete Befestigungstaschen (siehe Figuren 3, 12, 14 und 16). Bei den Befestigungstaschen 6, 7 handelt es sich um Vertiefungen der ansonsten flachen Breitseitenfläche der Haltescheibe 3, die sich in Radialrichtung, bezogen auf die Achse A, erstrecken. Die Figur 3 zeigt ein Ausführungsbeispiel, bei dem die Haltescheibe 3 erste Befestigungstaschen 6 und zweite Befestigungstaschen 7 aufweist. Die ersten Befestigungstaschen 6 erstrecken sich in einer 120°-Winkelverteilung in Radialrichtung und sind im Zentralbereich miteinander verbunden. Die Befestigungstaschen 6 besitzen parallel zueinander verlaufende Seitenflanken 6', die sich im Wesentlichen in Radialrichtung erstrecken. Die Befestigungstaschen 6 besitzen darüber hinaus eine parallel zur Stirnfläche verlaufende Bodenfläche 6", die eine Vertiefungsfläche ausbildet.

Zwischen den ersten Befestigungstaschen 6 befinden sich zweite Befestigungstaschen 7, die ebenfalls Seitenflanken 7' aufweisen, die im Wesentlichen in Radialrichtung verlaufen. Die Befestigungstaschen 7 besitzen darüber hinaus auch eine Bodenfläche 7", wobei die Bodenflächen 6" und 7" in einer gemeinsamen Ebene verlaufen. Die Bodenfläche 7" ist ringsum von einer Seitenwand umgeben.

In den Bodenflächen 6", 7" befinden sich Befestigungsöffnungen 15, 15', wobei erste Befestigungsöffnungen 15 einen kreisrunden Querschnitt besitzen und zweite Befestigungsöffnungen 15' als sich in Radialrichtung erstreckende Langlöcher ausgebildet sind. Die Befestigungstaschen 6, 7 sind insgesamt in einer sechszähligen Geometrie angeordnet, wobei die jeweils ersten Befestigungstaschen 6 in einer dreizähligen Symmetrie und die zweiten Befestigungstaschen 7 ebenfalls in einer dreizähligen Symmetrie angeordnet sind. Die Bodenflächen 6" besitzen drei Befestigungsöffnungen 15, 15'. Eine radial innenliegende von einem Rundloch gebildete Befestigungsöffnung ist beabstandet von einer mittleren, ebenfalls als Rundbohrung ausgebildeten Befestigungsöffnung 15. Radial außen erstreckt sich eine als Langloch 15' ausgebildete Befestigungsöffnung. Die Befestigungstaschen 7 besitzen jeweils nur eine Befestigungsöffnung, die von einem Langloch 15' ausgebildet ist.

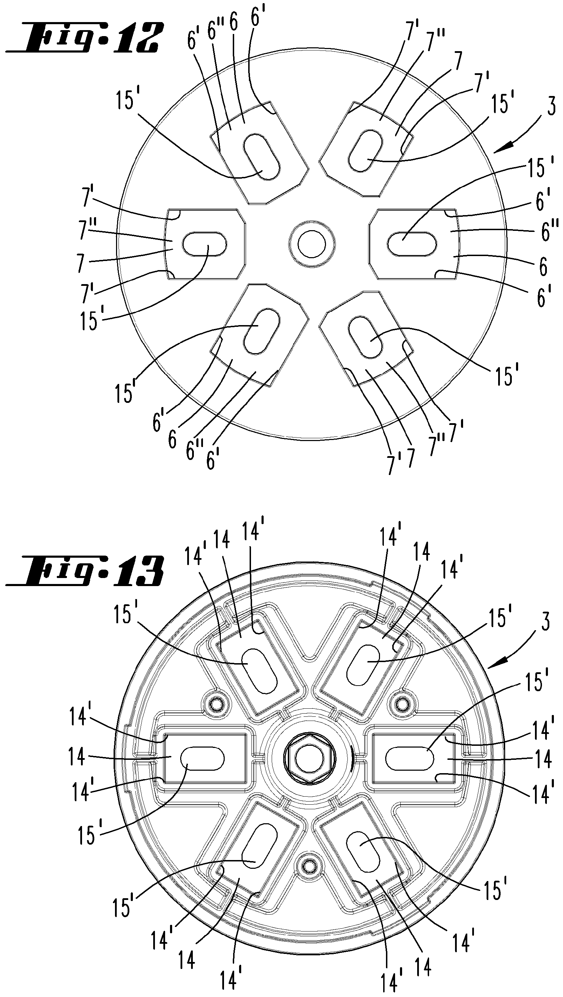

Bei dem in den Figuren 12 bis 15 dargestellten Ausführungsbeispiel sind sechs Befestigungstaschen 7 vorgesehen, die jeweils von der Achse beabstandet sind und rings von Seitenwänden umgebende Bodenflächen ausbilden.

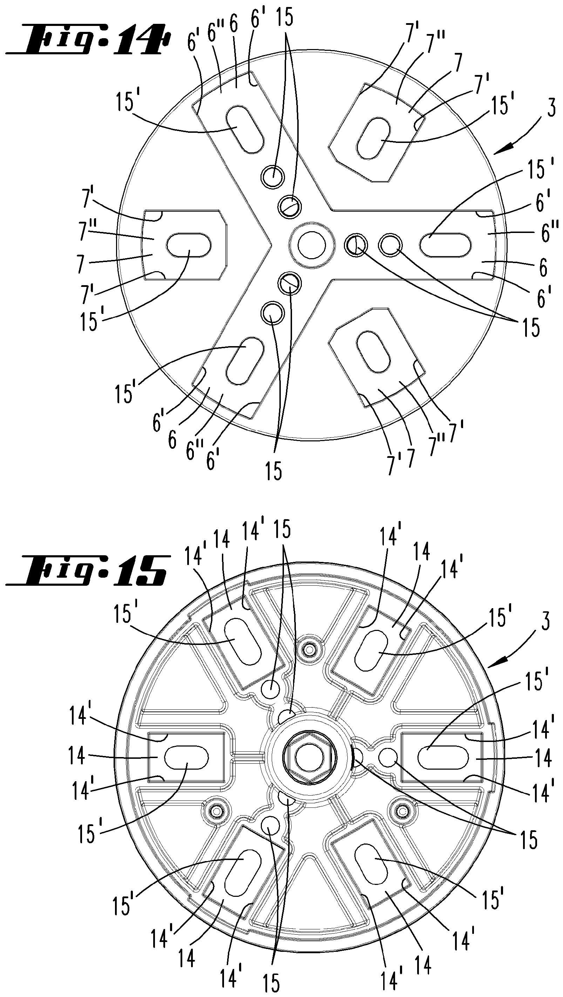

Bei dem in der Figur 14 dargestellten Ausführungsbeispiel besitzen die bis zum Zentrum hin ragenden Befestigungstaschen 6 als Befestigungsöffnungen eine kreisrunde Bohrung 15 und ein Langloch 15', wobei das Langloch 15' radial außerhalb der runden Bohrung 15 angeordnet ist. Die in ihrer Längenerstreckung 14 zweiten Befestigungstaschen 7 besitzen hingegen lediglich ein Langloch 15' als Befestigungsöffnung.

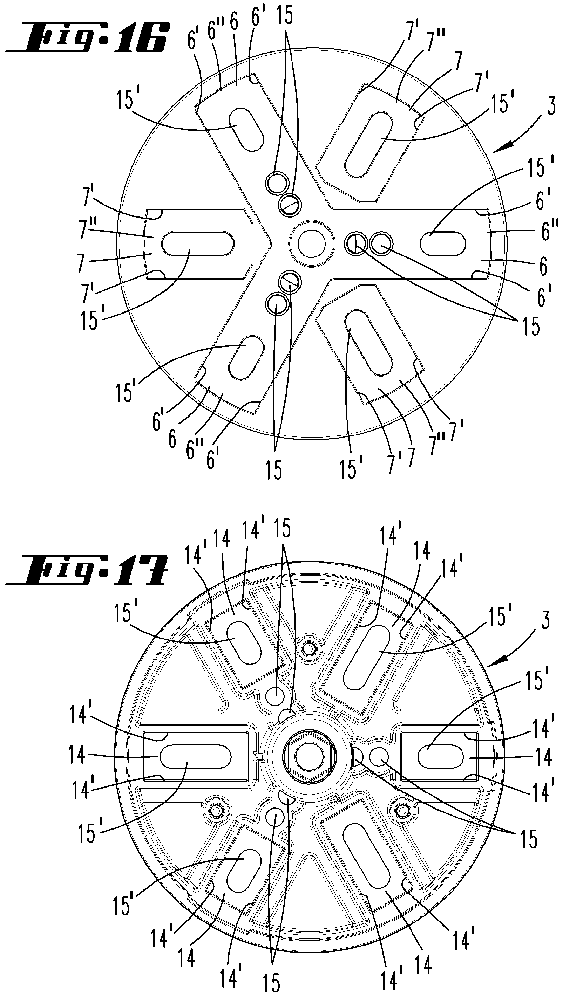

Das in der Figur 16 dargestellte Ausführungsbeispiel besitzt zweite Befestigungstaschen 7, die ebenfalls eine als Langloch ausgebildete Befestigungsöffnung 15' aufweisen. Hier ist das Langloch 15 aber in Radialrichtung länger ausgebildet als bei dem in der Figur 14 dargestellten Ausführungsbeispiel.

Die zum Einspannschaft 1 weisende Breitseite der Haltescheibe 3 trägt parallel zueinander verlaufende Führungsflanken 14'. Zwischen den Führungsflanken 14' erstrecken sich Führungsbahnen jeweils für einen Kulissenstein 13. Zwischen den Führungsflanken 14' liegen die Befestigungsöffnungen 15, 15'.

In jeder Führungsbahn, die insbesondere von einer Führungswanne 14 ausgebildet wird, liegt der Kulissenstein 13, der eine Gewindebohrung aufweist mit einem Innengewinde 13', in das der Außengewindeabschnitt 12' einer Schraube 12 eingedreht werden kann. Der Außengewindeabschnitt 12' der Schraube 12 durchgreift dabei die Befestigungsöffnungen 15, 15'.

Der Kopf 12" der Schraube 12 stützt sich auf einem Befestigungselement 9 ab, mit dem ein Sägeschaft 10, der an seinem freien Ende eine Sägeverzahnung 11 trägt, an der Haltescheibe 3 befestigt ist.

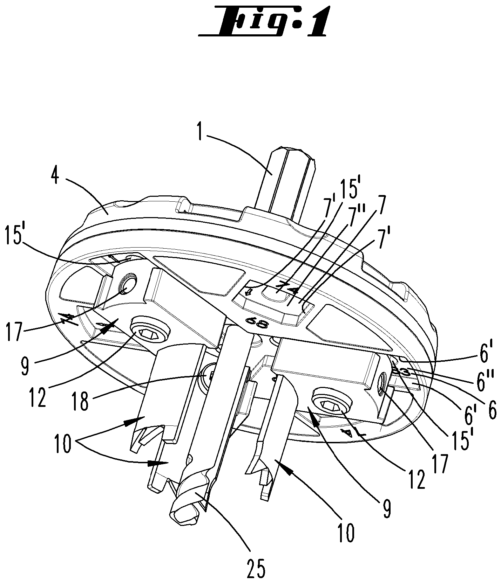

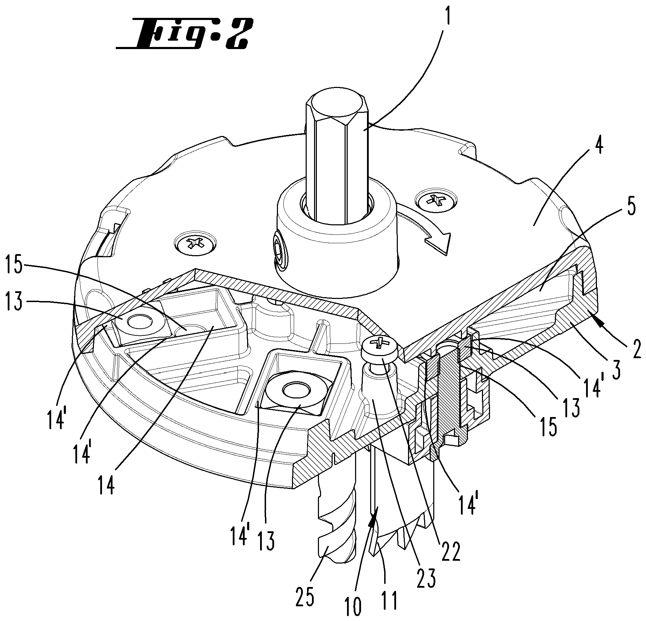

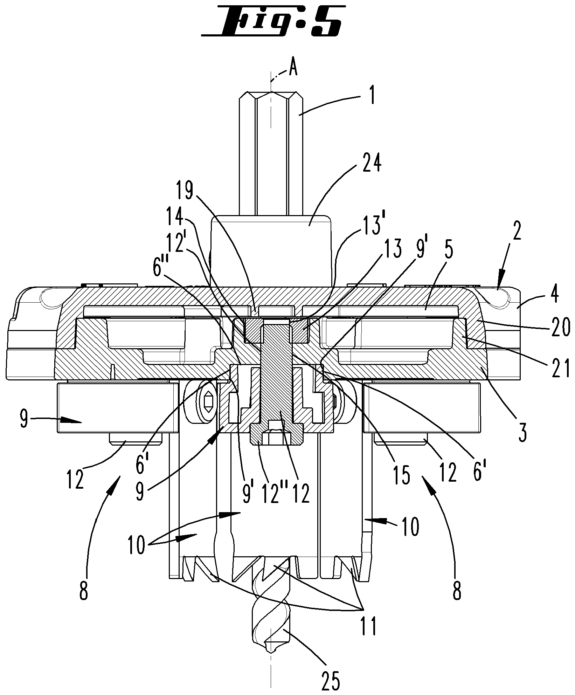

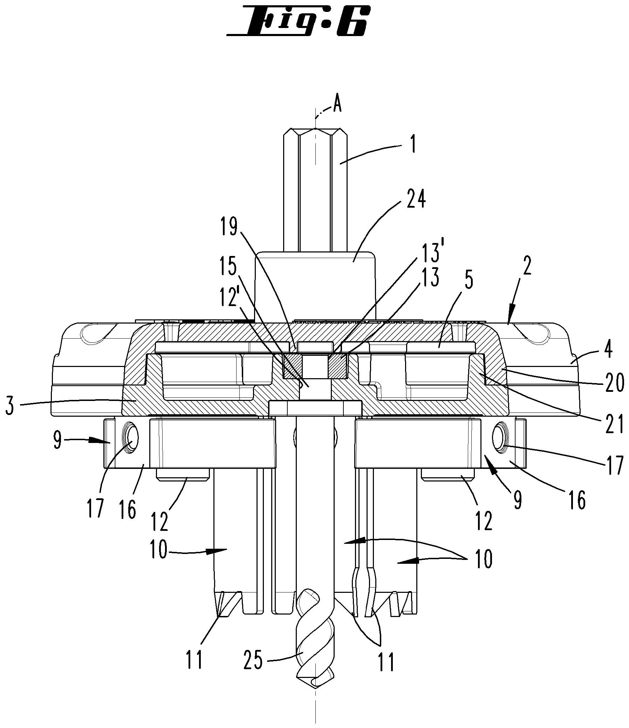

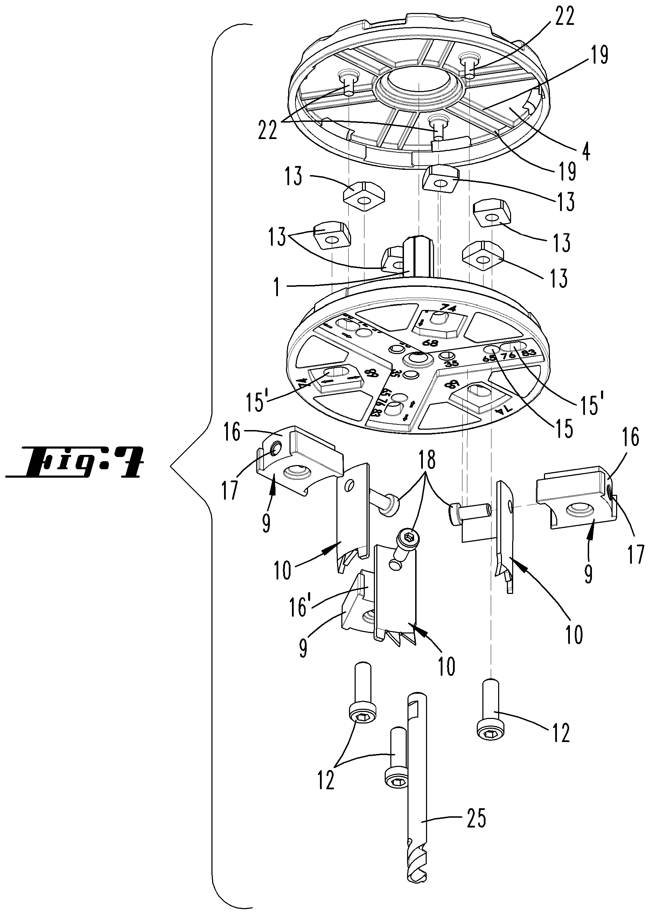

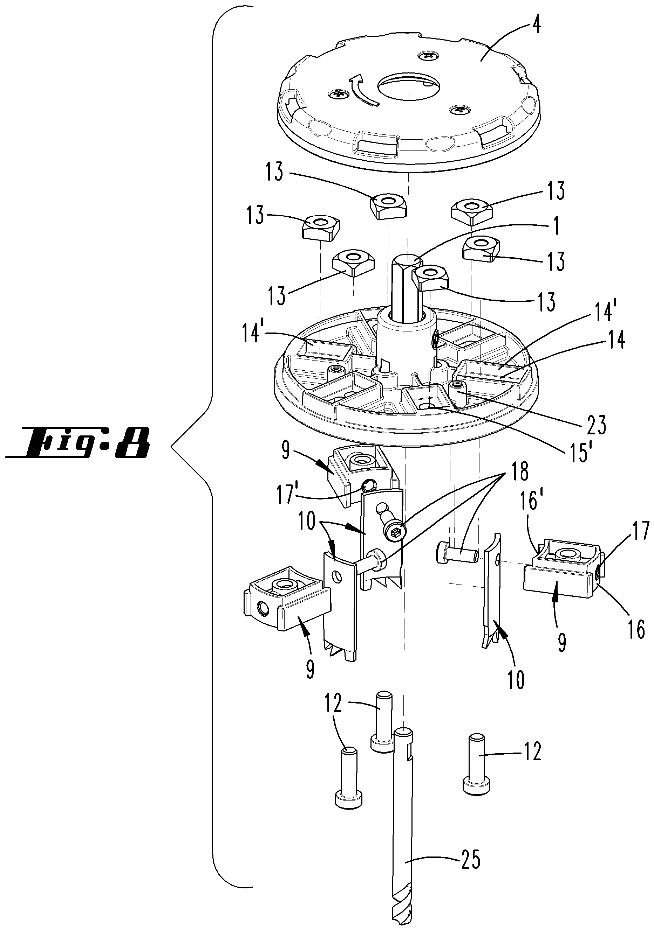

Bei dem in den Figuren 1 bis 9 dargestellten Ausführungsbeispiel wird das Befestigungselement 9 von einem Befestigungskörper ausgebildet, der parallel zueinander verlaufende Seitenwände 9' aufweist, die von den Seitenflanken 6', 7' der Befestigungstaschen 6, 7 geführt werden. Die Seitenwände 9' liegen bevorzugt berührend an den Seitenflanken 6', 7' an. Das Befestigungselement 9 stützt sich an der Bodenfläche 6", 7" ab und besitzt eine Breitseitenfläche mit einer Öffnung, in die die Schraube 12 eingesteckt ist, deren Kopf 12" sich am Befestigungselement 9 abstützt. Eine Befestigungsschraube 18 ist durch eine Befestigungsöffnung des gewölbten Sägeschaftes 10 hindurchgesteckt und in eine Gewindebohrung 17 bzw. 17' des Befestigungselementes 9 eingeschraubt. Beim Ausführungsbeispiel werden die Seitenflanken 6', 7' von den Seitenwänden der die Befestigungstaschen ausbildenden Vertiefungen ausgebildet. Die eine Führungsfunktion ausübenden Seitenflanken 6', 7' können aber auch von Nuten oder Rippen ausgebildet sein, die sich in Radialrichtung erstrecken. Die Seitenwände 9', die zur Führung verwendet werden, können dann die Seitenwände eines entsprechenden Gegenprofils sein.

Das Befestigungselement 9 besitzt zwei sich gegenüberliegende Befestigungsflächen 16, 16', wobei eine radial außenliegende Befestigungsflächen 16 eine Gewindebohrung 17 aufweist und nach radial außen gewölbt ist. Eine radial innen liegende Befestigungsfläche 16' ist radial nach außen gewölbt und besitzt eine Gewindebohrung 17'.

In einem nicht dargestellten Ausführungsbeispiel der Erfindung sind die Befestigungsflächen 16, 16' eben ausgebildet. Sie verlaufen in einer Tangentialebene zu einer Kreisbogenlinie um die Drehachse A. Die Sägeschäfte 10 sind bei diesem Ausführungsbeispiel ebenfalls eben ausgebildet. Zumindest sind sie in dem Bereich eben ausgebildet, der zur Anlage an die Befestigungsflächen 16, 16' vorgesehen ist. Die Sägeverzahnung 11 verläuft bevorzugt auf einer Bogenlinie.

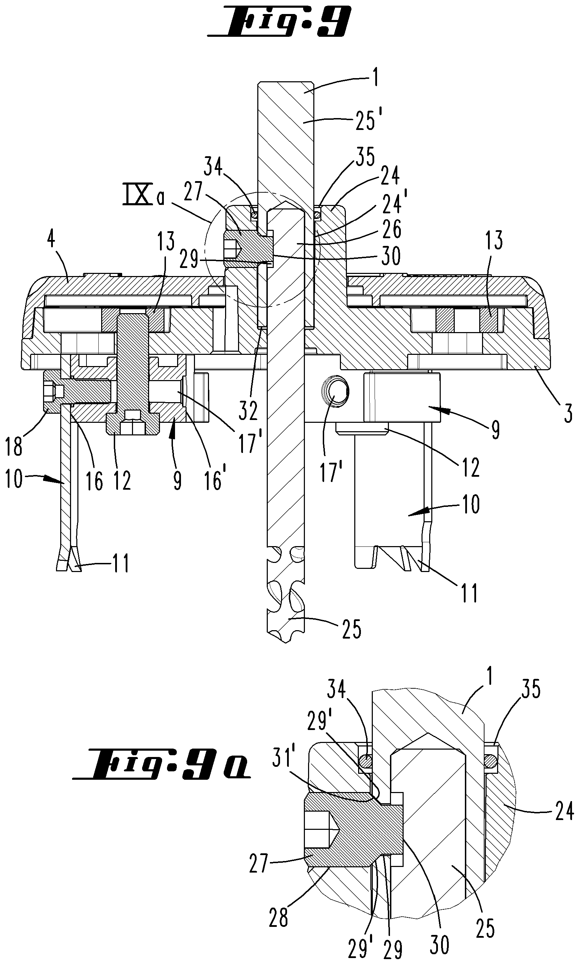

Die Figur 9 zeigt eine erste Variante zur Befestigung eines gewölbten Sägeschaftes 10 an der radial außenliegenden Befestigungsfläche 16 mittels der in die Gewindebohrung 17 eingedrehten Befestigungsschraube 18.

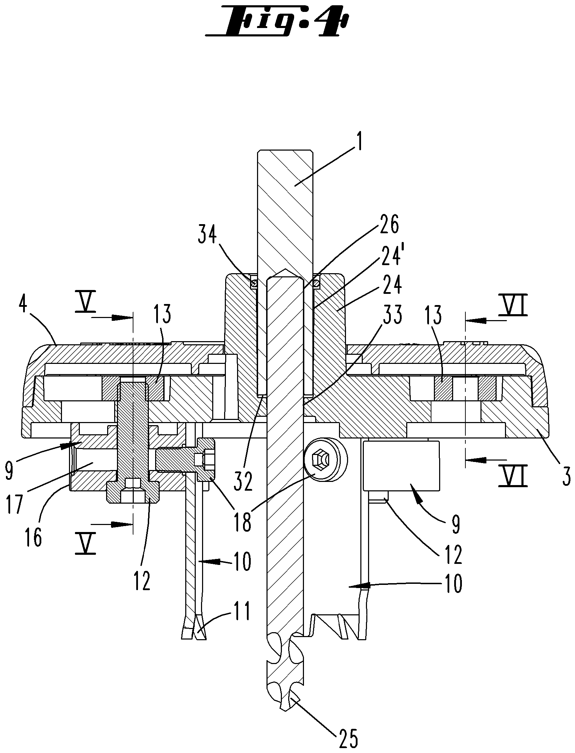

Die Figur 4 zeigt eine Variante, bei der der gewölbte Sägeschaft 10 an der radial innenliegenden Befestigungsfläche 16' mit einer Befestigungsschraube 18 befestigt ist. Die Befestigungsschrauben 18 werden jeweils in Radialrichtung in die ihnen zugeordneten Gewindebohrungen 17, 17' eingeschraubt, wohingegen sich die Schrauben 12 in Axialrichtung erstrecken. Durch Lösen der Schrauben 12 kann die radiale Position des Befestigungselementes 9 und damit auch die radiale Position des Sägeschaftes 10 eingestellt werden. Hierzu wird die Schraube 12 entweder durch eine ihrem Durchmesser angepasste Rundbohrung 15 gesteckt oder durch ein Langloch 15', wobei die beiden gerundeten Schmalseiten des Langloches 15' Anschlagflanken für den Gewindeschaft 12' der Schraube 12 darstellen.

Die erfindungsgemäße Anordnung der Befestigungsöffnungen 15, 15' und die Möglichkeit, den Sägeschaft 10 an zwei radial unterschiedlich vom Zentrum beabstandeten Befestigungsflächen 16, 16' befestigen zu können, liefert ein hohes Variationsspektrum hinsichtlich der Befestigung der Sägeschäfte 10 in unterschiedlichen Radialstellungen zur Achse A.

Die in Führungswannen 14 unterschiedlicher radialer Länge (siehe Figuren 13, 15, 17) einliegenden Kulissensteine 13 werden von den Böden der Führungswannen 14 und von den Führungsflanken 14' sowie von den Böden der Führungswannen 14 gegenüberliegenden Stützrippen 19 des Deckelteiles 4 gehalten, sind jedoch innerhalb der Führungswanne 14 radial verschieblich.

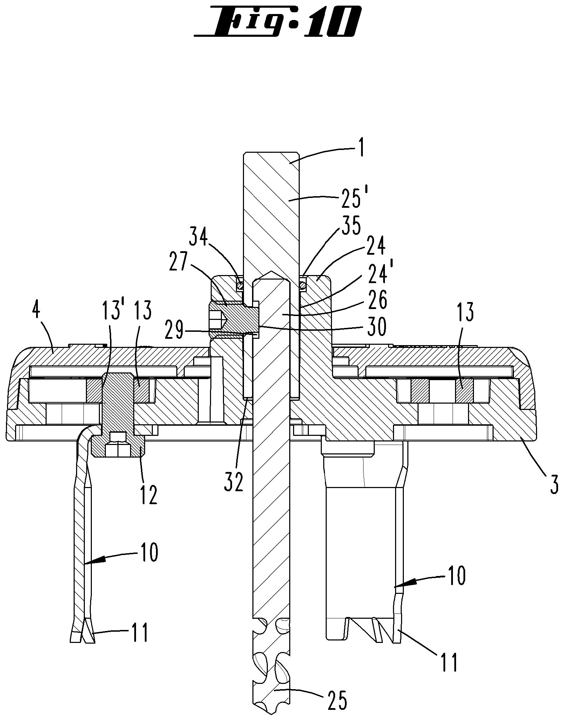

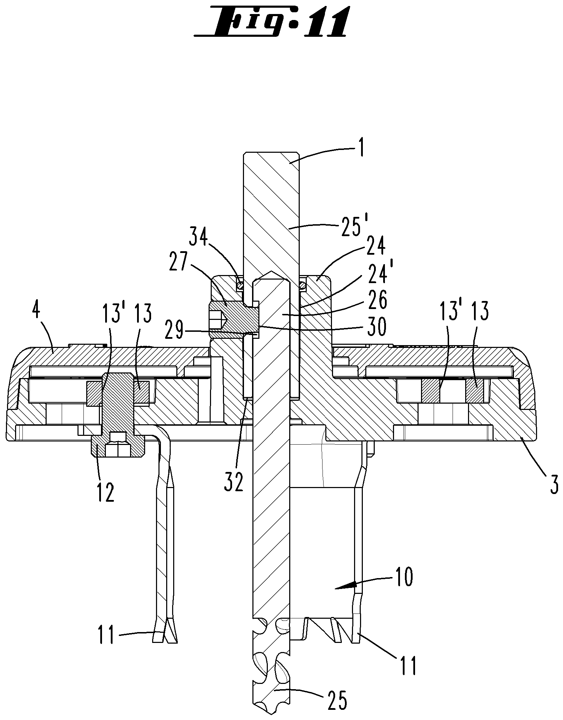

Die Figuren 10 und 11 zeigen ein weiteres Ausführungsbeispiel eines Sägeelementes 8, bei dem der Sägeschaft 10 materialeinheitlich mit einem Befestigungselement 9 verbunden ist. Bei dem Befestigungselement 9 handelt es sich um eine rechtwinklige Abwinklung des Sägeschaftes 10. Die Figur 10 zeigt eine radial außenliegende Anordnung des Sägeschaftes 10 gegenüber dem Befestigungselement 9. Die Höhlung der Wölbung des Sägeschaftes 10 weist hier in Richtung auf das Befestigungselement 9.

Bei dem in der Figur 11 dargestellten Ausführungsbeispiel ist ein anderes Sägeelement 8 mit seinem Befestigungselement 9 an der Haltescheibe 3 befestigt. Auch hier ragt das Befestigungselement 9 rechtwinklig vom Sägeschaft 10 ab. Es ragt jedoch von der nach außen gewölbten Seite des Sägeschaftes 10 ab.

### Liste der Bezugszeichen

| | | | |
|---|---|---|---|
| 1 | Einspannschaft | 16' | Befestigungsfläche (radial außen) |
| 2 | Halteglied | | |
| 3 | Haltescheibe | 17 | Gewindebohrung |
| 4 | Deckelteil | 17' | Gewindebohrung |
| 5 | Höhlung | 18 | Befestigungsschraube |
| 6 | Befestigungstasche | 19 | Stützrippe |
| 6' | Seitenflanke | 20 | Randabschnitt |
| 6" | Bodenfläche | 21 | Randsteg |
| 7 | Befestigungstasche | 22 | Schraube |
| 7' | Seitenflanke | 23 | Befestigungssockel |
| 7" | Bodenfläche | 24 | Befestigungshülse |
| 8 | Sägeelement | 24' | Axialhöhlung |
| 9 | Befestigungselement | 25 | Pilotbohrer |
| 9' | Seitenwand | 25' | Einspannende |
| 10 | Sägeschaft | 26 | Axialbohrung |
| 11 | Sägeverzahnung | 27 | Klemmschraube |
| 12 | Schraube | 28 | Gewindebohrung |
| 12' | Außengewindeabschnitt, Gewindeschaft | 29 | Fenster |
| | | 29' | Rand |
| 12" | Kopf | 30 | Abflachung |
| 13 | Kulissenstein | 31 | Konusabschnitt |
| 13' | Innengewinde | 32 | Boden |
| 14 | Führungswanne | 33 | Öffnung |
| 14' | Führungsflanke | 34 | Sprengring |
| 15 | Befestigungsöffnung | 35 | Umfangsausnehmung |
| 15' | Befestigungsöffnung, Langloch | A | Achse |
| 16 | Befestigungsfläche | | |

## Patentansprüche

1. Lochsäge mit einem durch Drehen eines Einspannschaftes (1) um eine Achse (A) in eine Drehung bringbaren Halteglied (2), das auf seiner vom Einspannschaft (1) weg weisenden Seite sich in Radialrichtung zur Achse (A) erstreckende, in gleichmäßiger Umfangsverteilung um die Achse (A) angeordnete Befestigungstaschen (6, 7) aufweist, wobei zumindest einer der Befestigungstaschen (6, 7) ein Sägeelement (8) zugeordnet ist, wobei das Sägeelement (8) ein Befestigungselement (9) aufweist, welches auf einer Bodenfläche (6") der Befestigungstasche (6, 7) aufliegt, wobei zwei Seitenflächen (9') des Befestigungselementes (9) an je einer Seitenflanke (6', 7') der Befestigungstasche (6, 7) anliegen und das Befestigungselement (9) mit einer Schraube (12), deren Gewindeschaft (12') eine als Langloch (15') ausgebildete Befestigungsöffnung (15') der Bodenfläche (6', 7') durchgreifend in ein Innengewinde (13') eingeschraubt ist, am Halteglied (2) derart befestigbar ist, dass eine am Ende eines vom Befestigungselement (9) in Achsrichtung abragenden Sägeschaftes (10) angeordnete Sägeverzahnung (11) in einem definierten Abstand zur Achse (A) liegt, wobei die Schraube (12) von dem Befestigungselement (9) her in einem das Innengewinde (13') ausbildenden Kulissenstein (13) eingeschraubt ist, der von Führungsflächen (14) geführt in Radialrichtung verschieblich ist, **dadurch gekennzeichnet, dass** die Befestigungstaschen (6, 7) zusätzlich zu den als Langlöcher (15') ausgebildeten Befestigungsöffnungen (15, 15') als Rundbohrungen (15) ausgebildete Befestigungsöffnungen (15, 15') aufweisen, wobei Ränder der Befestigungsöffnungen (15, 15') Anschläge für die Gewindeschäfte (12') ausbilden und so angeordnet sind, dass sich die Sägeverzahnungen (11) von mindestens drei Sägeelementen (8) gemeinsam auf Kreisbogenlinien mit verschiedenen Durchmessern um die Achse (A) anordnen lassen.

2. Lochsäge nach Anspruch 1, **dadurch gekennzeichnet, dass** die Befestigungselemente (9) Befestigungskörper sind, die an voneinander weg weisenden Seitenflächen Befestigungsflächen (16, 16') aufweisen zur Befestigung eines Sägeschaftes (10).

3. Lochsäge nach Anspruch 2, **dadurch gekennzeichnet, dass** eine radial innenliegende Befestigungsfläche (16') und eine radial außenliegende Befestigungsfläche (16") jeweils auf sich um die Achse erstreckende Bogenlinien gekrümmt sind, zur flächenanliegenden Befestigung eines gekrümmten Sägeschaftes (10).

4. Lochsäge nach einem der vorhergehenden Ansprüche, **dadurch gekennzeichnet, dass** die Befestigungselemente (9) rechtwinklige Abwinklungen eines den Sägeschaft (10) ausbildenden Metallstreifens sind, wobei die Abwinklungen erster Sägeelemente (8) bezogen auf eine Krümmung des Sägeschaftes (10) in Radialeinwärtsrichtung und die Abwinklungen zweiter Sägeelemente (8) in Radialauswärtsrichtung abgewinkelt sind.

5. Lochsäge nach einem der vorhergehenden Ansprüche, **dadurch gekennzeichnet, dass** das Halteglied (2) eine Haltescheibe (3) und ein Deckelteil (4) aufweist, wobei die Haltescheibe (3) die Befestigungstaschen (6, 7) ausbildet und das Deckelteil (4) eine die Kulissensteine (13) aufnehmende Höhlung (5) überfängt.

6. Lochsäge nach Anspruch 5, **dadurch gekennzeichnet, dass** das Deckelteil (4) Stützrippen (19) ausbildet zur axialen Fixierung der in einer Führungswanne (14) der Haltescheibe (3) einliegenden Kulissensteine (13).

7. Lochsäge nach einem der vorhergehenden Ansprüche, **dadurch gekennzeichnet, dass** jeder Befestigungstasche (6, 7) ein in einer Führungswanne (14) radial verschieblicher Kulissenstein (13) zugeordnet ist.

8. Lochsäge nach einem der vorhergehenden Ansprüche, **dadurch gekennzeichnet, dass** die Mehrzahl von in gleichmäßiger Umfangsverteilung um die Achse (A) angeordneten Befestigungstaschen (6, 7) erste Befestigungstaschen aufweist, die um 120 Grad winkelversetzt zueinander angeordnet sind und die sich bis ins Zentrum der Haltescheibe (3) erstrecken.

9. Lochsäge nach einem der vorhergehenden Ansprüche, **dadurch gekennzeichnet, dass** in einem 60 Grad-Winkelabstand zu den ersten Befestigungstaschen (6) zweite Befestigungstaschen (7) vorgesehen sind, die rings von einer Seitenwand (7') umschlossen sind.

10. Lochsäge nach einem der vorhergehenden Ansprüche, **dadurch gekennzeichnet, dass** die Langlöcher (15') mit ihren sich gegenüberliegenden Bogenabschnitten Anschlagflächen für Gewindeabschnitte (12') der Schrauben (12) ausbilden und die Befestigungstasche (6) zumindest eine Rundbohrung (15) und ein Langloch (15') aufweist.

11. Lochsäge nach Anspruch 1, **dadurch gekennzeichnet, dass** der Einspannschaft (1) in einer Befestigungshülse (24) des Haltegliedes (2) steckt und ein Pilotbohrer (25) in einer Axialbohrung (26) des Einspannschaftes (1) mit einem radialen Klemmelement (27) gesichert einsteckt, wobei das Klemmelement (27) eine ein Fenster (29) durchgreifende Klemmschraube (27) ist, wobei das Fenster (29) eine Radialöffnung (29) der Axialbohrung (26) ist und einen konischen Rand (29') aufweist, gegen den ein Konosabschnitt (31) der Klemmschraube (27) tritt.

12. Lochsäge nach Anspruch 11, **dadurch gekennzeichnet, dass** die Klemmschraube (27) in ein Innengewinde der Befestigungshülse (24) eingedreht ist und die sich in einer Vertiefung und/oder auf einer Abflachung (30) des Einspannendes (25') des Pilotbohrers (25) abstützt.

13. Lochsäge nach einem der Ansprüche 11 oder 12, **gekennzeichnet durch** einen den Einspannschaft (1) umgebenden Sprengring (34), der in einer Umfangsausnehmung (35) im Bereich des Randes der Axialhöhlung (24') einliegt, sich mit seiner Innenwandung am Einspannschaft (1) und sich mit seiner Außenwand an der Umfangswandung der Axialhöhlung (24) abstützt.

## Claims

1. Hole saw with a holding member (2) which can be brought into rotation about an axis (A) by rotating a clamping shank (1) and which has on its side pointing away from the clamping shank (1) fastening pockets (6, 7) which extend in the radial direction with respect to the axis (A) and are arranged in a uniform circumferential distribution about the axis (A), wherein a sawing element (8) is associated with at least one of the fastening pockets (6, 7), wherein the sawing element (8) has a fastening element (9) which rests on a bottom surface (6") of the fastening pocket (6, 7), wherein two side surfaces (9') of the fastening element (9) each rest against a side flank (6', 7") of the fastening pocket (6, 7) and the fastening element (9) can be fastened to the retaining member (2) by means of a screw (12), the threaded shank (12') of which is screwed through a fastening opening (15') of the bottom surface (6', 7') designed as an elongated hole (15'), into an internal thread (13') in such a way that a saw toothing (11) arranged at the end of a saw shank (10) projecting from the fastening element (9) in the axial direction lies at a defined distance from the axis (A), wherein the screw (12) is screwed from the fastening element (9) into a sliding block (13) forming the internal thread (13'), which is guided by guide surfaces (14) so as to be displaceable in the radial direction, **characterised in that** the fastening pockets (6, 7) have, in addition to the fastening openings (15, 15') designed as elongated holes (15'), fastening openings (15, 15') designed as round bores (15), wherein edges of the fastening openings (15, 15') form stops for the threaded shafts (12') and are arranged in such a way that the saw teeth (11) of at least three saw elements (8) can be arranged together on circular arc lines with different diameters about the axis (A).

2. Hole saw according to claim 1, **characterised in that** the fastening elements (9) are fastening bodies which have fastening surfaces (16, 16') on side surfaces facing away from each other for fastening a saw shaft (10).

3. Hole saw according to claim 2, **characterised in that** a radially inner fastening surface (16') and a radially outer fastening surface (16") are each curved to arcuate lines extending around the axis, for face-to-face fastening of a curved saw shank (10).

4. Hole saw according to one of the preceding claims, **characterised in that** the fastening elements (9) are right-angled bends of a metal strip forming the saw shank (10), wherein the bends of first saw elements (8) are angled in the radially inward direction relative to a curvature of the saw shank (10) and the bends of second saw elements (8) are angled in the radially outward direction.

5. Hole saw according to one of the preceding claims, **characterised in that** the retaining member (2) has a retaining disc (3) and a cover part (4), wherein the retaining disc (3) forms the fastening pockets (6, 7) and the cover part (4) overlaps a cavity (5) receiving the sliding blocks (13).

6. Hole saw according to claim 5, **characterised in that** the cover part (4) forms supporting ribs (19) for axially fixing the sliding blocks (13) located in a guide trough (14) of the retaining disc (3).

7. Hole saw according to one of the preceding claims, **characterised in that** each fastening pocket (6, 7) is assigned a sliding block (13) which is radially displaceable in a guide trough (14).

8. Hole saw according to one of the preceding claims, **characterised in that** the plurality of fastening pockets (6, 7) arranged in uniform circumferential distribution around the axis (A) has first fastening pockets which are arranged at an angle offset of 120 degrees to one another and which extend into the centre of the retaining disc (3).

9. Hole saw according to one of the preceding claims, **characterised in that** second fastening pockets (7) are provided at an angular distance of 60 degrees from the first fastening pockets (6), which are enclosed around by a side wall (7').

10. Hole saw according to one of the preceding claims, **characterised in that** the elongated holes (15') form stop surfaces for threaded portions (12') of the screws (12) with their opposing curved portions and the fastening pocket (6) has at least one round bore (15) and one elongated hole (15').

11. Hole saw according to claim 1, **characterised in that** the clamping shank (1) is inserted in a fastening sleeve (24) of the holding member (2) and a pilot drill (25) is secured in an axial bore (26) of the clamping shank (1) by a radial clamping element (27), wherein the clamping element (27) is a clamping screw (27) engaging through a window (29), wherein the window (29) is a radial opening (29) of the axial bore (26) and has a conical edge (29') against which a conical section (31) of the clamping screw (27) steps.

12. Hole saw according to claim 11, **characterised in that** the clamping screw (27) is screwed into an internal thread of the fastening sleeve (24) and is supported in a recess and/or on a flattened portion (30) of the clamping end (25') of the pilot drill (25).

13. Hole saw according to one of claims 11 or 12, **characterised by** a snap ring (34) surrounding the clamping shank (1), which is located in a circumferential recess (35) in the region of the edge of the axial cavity (24'), is supported with its inner wall on the clamping shank (1) and is supported with its outer wall on the circumferential wall of the axial cavity (24).

## Revendications

1. Scie cloche, pourvue d'un organe de retenue (2), susceptible d'être amené en rotation en faisant tourner une tige de serrage (1) autour d'un axe (A), qui sur son côté dirigé à l'opposé de la tige de serrage (1) comporte des poches de fixation (6, 7) s'étendant dans la direction radiale vers l'axe (A), placées en distribution circonférentielle régulière autour de l'axe (A), à au moins l'une des poches de fixation (6, 7) étant associé un élément de sciage (8), l'élément de sciage (8) comportant un élément de fixation (9), lequel repose sur une surface (6") de fond inférieur de la poche de fixation (6, 7), deux surfaces latérales (9') de l'élément de fixation (9) étant adjacentes à chaque fois un flanc latéral (6', 7') de la poche de fixation (6, 7) et à l'aide d'une vis (12), dont la tige filetée (12') est vissée dans un taraudage (13'), en traversant un orifice de fixation (15') conçu sous la forme d'un trou oblong (15') de la surface de fond inférieur (6', 7'), l'élément de fixation (9) étant susceptible d'être fixé sur l'organe de retenue (2), de telle sorte qu'une denture de sciage (11) placée sur une tige de sciage (10) saillant vers le bas sur une extrémité de l'élément de fixation (9) dans la direction axiale se situe à un écart défini par rapport à l'axe (A), la vis étant vissée à partir de l'élément de fixation (9) dans un coulisseau (13) constituant le taraudage (13'), qui en étant guidé par des surfaces de guidage (14), est déplaçable dans la direction radiale, **caractérisée en ce que** les poches de fixation (6, 7) comportent additionnellement aux orifices de fixation (15, 15') conçus sous la forme de trous oblongs (15') des orifices de fixation (15, 15') conçus sous la forme de perçages ronds (15), des bords des orifices de fixation (15, 15') constituant des butées pour les tiges filetées (12') et étant placés de telle sorte, que les dentures de sciage (11) d'au moins trois éléments de sciage (8) se laissent placer sur des lignes en arc de cercle de différents diamètres autour de l'axe (A).

2. Scie cloche selon la revendication 1, **caractérisée en ce que** les éléments de fixation (9) sont des corps de fixation, qui sur des surfaces latérales s'éloignant l'une de l'autre comportent des surfaces de fixation (16, 16'), pour la fixation d'une tige de sciage (10).

3. Scie cloche selon la revendication 2, **caractérisée en ce qu'**une surface de fixation (16') située à l'intérieur en direction radiale et une surface de fixation (16") située à l'extérieur en direction radiale sont recourbées chacune sur des lignes courbes, pour la fixation à fleur de surface d'une tige de sciage (10) incurvée.

4. Scie cloche selon l'une quelconque des revendications précédentes, **caractérisée en ce que** les éléments de fixation (9) sont des coudes à angle droit d'une bande métallique constituant la tige de sciage (10), les coudes de premiers éléments de sciage (8) étant coudés par rapport à une courbure de la tige de sciage (10) dans la direction radiale vers l'intérieur et les coudes de deuxièmes éléments de sciage (8) étant coudés dans la direction radiale vers l'extérieur.

5. Scie cloche selon l'une quelconque des revendications précédentes, **caractérisée en ce que** l'organe de maintien (2) comporte un rondelle de retenue (3) et une pièce formant couvercle (4), la rondelle de retenue (3) constituant les poches de fixation (6, 7) et la pièce formant couvercle (4) recouvrant une cavité (5) réceptionnant les coulisseaux (13).

6. Scie cloche selon la revendication 5, **caractérisée en ce que** la pièce formant couvercle (4) constitue des nervures d'appui (19), pour la fixation axiale des coulisseaux (13) insérés dans une cuve de guidage (14) de la rondelle de retenue (3).

7. Scie cloche selon l'une quelconque des revendications précédentes, **caractérisée en ce qu'**à chaque poche de fixation (6, 7) est associé un coulisseau (13) déplaçable en direction radiale dans une cuve de guidage (14).

8. Scie cloche selon l'une quelconque des revendications précédentes, **caractérisée en ce que** la pluralité des poches de fixation (6, 7) placées en distribution régulière autour de l'axe (A) comporte des premières poches de fixation, qui sont placées avec un décalage angulaire mutuel de 120 degrés et qui s'étendent jusqu'au centre de la rondelle de retenue (3).

9. Scie cloche selon l'une quelconque des revendications précédentes, **caractérisée en ce qu'**à un écart angulaire de 60 degrés par rapport aux premières poches de fixation (6) sont prévues des deuxièmes poches de fixation (7), qui sont entourées de tous côtés d'une paroi latérale (7').

10. Scie cloche selon l'une quelconque des revendications précédentes, **caractérisée en ce que** par leurs portions courbes mutuellement opposées, les trous oblongs (15') constituent des surfaces de butée pour des segments filetés (12') des vis (12) et la poche de fixation (6) comporte au moins un perçage rond (15) et un trou oblong (15').

11. Scie cloche selon la revendication 1, **caractérisée en ce que** la tige de serrage (1) est enfichée dans une douille de fixation (24) de l'organe de retenue (2) et un foret pilote (25) est enfiché dans un perçage axial (26) de la tige de serrage (1) en étant bloqué à l'aide d'un élément de serrage (27) radial, l'élément de serrage (27) étant une vis de serrage (27) traversant une fenêtre (29), la fenêtre (29) étant un orifice radial (29) du perçage axial (26) et comportant un bord (29') conique, contre lequel s'appuie un segment conique (31) de la vis de serrage (27).

12. Scie cloche selon la revendication 11, **caractérisée en ce que** la vis de serrage (27) est engagée dans un taraudage de la douille de fixation (24) et s'appuie dans un creux et / ou sur un méplat (30) de l'extrémité d'enserrage (25') du foret pilote (25).

13. Scie cloche selon l'une quelconque des revendications 11 ou 12, **caractérisée par** un circlip (34) entourant la tige de serrage (1), qui est insérée dans un évidement circonférentiel (35) dans la zone du bord de la cavité axiale (24'), s'appuie par sa paroi intérieure sur la tige de serrage (1) et s'appuie par sa paroi extérieure sur la paroi circonférentielle de la cavité axiale (24).
